(19) **Europäisches Patentamt / European Patent Office / Office européen des brevets**

(11) **EP 1 934 441 B1**

(12) **FASCICULE DE BREVET EUROPEEN**

(45) Date de publication et mention de la délivrance du brevet:
**02.01.2013 Bulletin 2013/01**

(21) Numéro de dépôt: **06831188.5**

(22) Date de dépôt: **18.09.2006**

(51) Int Cl.:
*F01M 13/00* *(2006.01)*

(86) Numéro de dépôt international:
**PCT/FR2006/050899**

(87) Numéro de publication internationale:
**WO 2007/039690 (12.04.2007 Gazette 2007/15)**

(54) **PROCEDE ET DISPOSITIF DE TRAITEMENT DES GAZ DE CARTER D'UN MOTEUR A COMBUSTION INTERNE**

VERFAHREN UND VORRICHTUNG ZUR BEHANDLUNG DER KURBELGEHÄUSEGASE EINES BRENNKRAFTMOTORS

METHOD AND DEVICE FOR TREATING THE CRANKCASE GASES OF AN INTERNAL COMBUSTION ENGINE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **29.09.2005 FR 0552948**

(43) Date de publication de la demande:
**25.06.2008 Bulletin 2008/26**

(73) Titulaire: **Peugeot Citroën Automobiles Société Anonyme**
**78140 Vélizy Villacoublay (FR)**

(72) Inventeurs:
• **GAUCHARD, Sébastien**
**F-92500 Rueil Malmaison (FR)**
• **BLEUSSE, Michel**
**F-78920 Ecquevilly (FR)**

(74) Mandataire: **Ménès, Catherine**
**Peugeot Citroën Automobiles SA**
**PI (LG081)**
**18, rue des Fauvelles**
**92250 La Garenne-Colombes (FR)**

(56) Documents cités:
WO-A-00/77351    WO-A-97/03285
WO-A-98/28529    GB-A- 2 158 153
US-B1- 6 546 921

**Description**

La présente invention concerne le domaine des moteurs à combustion interne et plus spécialement un procédé et un dispositif pour la ventilation du carter d'un moteur à combustion interne. L'invention trouve une application particulièrement avantageuse dans le domaine de l'industrie automobile.

Dans un moteur à combustion interne, la chambre de combustion est délimitée du côté du carter par le piston et les segments qui assurent l'étanchéité entre le piston et la paroi du cylindre monté dans (ou faisant partie intégrante du carter). Néanmoins, cette étanchéité n'est jamais parfaite, et de façon inhérente au principe même de conception d'un tel moteur, une fuite d'une partie des gaz de combustion via les segments est inéluctable. Ces gaz sont communément appelés gaz de carter, ou encore en utilisant la terminologie anglo-saxonne, gaz de blow-by, ces différents termes étant utilisés comme des synonymes dans la suite de ce document.

Notamment pour des questions de contrôle des émissions de gaz polluants, il est aujourd'hui de règle de recycler les gaz de carter en les réintroduisant au niveau de l'admission. Pour ce faire, ils sont donc aspirés à l'admission moteur ce qui permet de plus de maintenir le bas du carter en dépression.

Outre des gaz de combustion, c'est-à-dire essentiellement de la vapeur d'eau du dioxyde de carbone et de l'azote, les gaz de carter comportent également des imbrûlés (air ou plus exactement oxygène et azote et du carburant) et de l'huile (essentiellement l'huile de lubrification des pistons entraînée par les gaz de combustion). Les gaz de carter s'écoulent vers le bas du carter, puis remontent généralement vers la culasse par des cheminées.

La réadmission est obtenue typiquement à l'aide d'un répartiteur. Par temps froid, ce répartiteur peut présenter une température bien inférieure à 0°C de sorte que la vapeur d'eau contenue dans les gaz de carter peut se condenser, puis se solidifier, ou former une émulsion eau/huile qui se solidifie, formant une masse qui bouche les conduits, fait monter en pression le carter et peut ainsi entraîner une casse moteur et/ou un incendie du véhicule.

Pour remédier à ce risque, le moyen le plus courant consiste dans l'implantation de moyens de chauffage électriques des tuyaux de gaz carter. Ces moyens sont typiquement constitués par une résistance sous tension venant localement réchauffer une surface voir GB 2158153. Ce moyen présente toutefois l'inconvénient d'être coûteux d'un point de vue énergétique et suppose la présence d'un faisceau électrique - avec un certain nombre d'inconvénients liés aux problèmes d'ergonomie pour l'opérateur, de passage d'outils, et d'implantation car les points de fixation pour installer les faisceaux électriques, les connexions d'alimentation et les multiples supports nécessaires ne sont pas toujours disponibles dans le moteur. Par ailleurs, cette solution n'éradique pas la formation de gel ou d'émulsion mais simplement crée une zone où cette formation est effectivement interdite, mais sans garantie que le gel ou l'émulsion ne se forme pas en un autre point.

Une autre solution connue consiste à faire passer les tuyaux de gaz de carter à l'intérieur des tuyaux acheminant le fluide de refroidissement. Là encore, cette solution pose des problèmes d'implantation, est relativement onéreuse et il reste des zones dans lesquelles le gel ou l'émulsion peuvent éventuellement se former.

Il serait donc souhaitable de disposer d'une solution permettant d'obvier plus efficacement le risque de formation d'un gel ou d'une émulsion dans les circuits de gaz carter, tout en minimisant les problèmes d'implantation.

La solution ici proposé consiste à diluer les gaz de carter par un fluide gazeux présentant un faible degré d'humidité et dont la température est sensiblement supérieure à la température ambiante comme défini en revendication 1 ou 7. Le fluide gazeux diluant est de préférence de l'air qui avantageusement, est d'autant plus déshydraté que la température ambiante est basse.

Dans une variante préférée de l'invention, l'alimentation en fluide diluant n'est commandée que si la température ambiante est considérée est basse, par exemple inférieure à 0°C, c'est-à-dire si elle est considérée comme dans une plage à risque.

L'invention a ainsi également pour objet, un moteur à combustion interne qui comporte des moyens pour réchauffer de l'air d'admission et diluer les gaz de carter avec cet air réchauffé, lesdits moyens de réchauffage étant par exemple un conduit longeant la culasse ou le collecteur d'échappement.

D'autres détails et caractéristiques avantageuses de l'invention ressortent de la description faite ci-après, en regard des dessins annexés, dans lesquels :

La figure 1 est un schéma illustrant le diagramme d'état de l'eau ;

La figure 2 est un schéma illustrant la circuit des gaz carter dans un bloc moteur selon l'invention.

Pour comprendre le risque de gel des gaz de carter, il est utile de se reporter à leurs compositions chimiques et caractéristiques thermodynamiques. Comme indiqué plus haut, ces gaz sont constitués par un mélange de gaz de combustion (pour l'essentiel, de l'eau, du dioxyde de carbone et de l'azote), de gaz imbrûlés (oxygène, azote et carburant) et d'huile.

La réaction de combustion peut être écrite, selon une approche simplifiée, ramenée à une molécule d'hydrocarbure $CH_y$, en supposant le mélange de richesse 1, et avec une composition de l'air égale à de la façon suivante :

$$CH_y + \left(1+\frac{Y}{4}\right)[O_2 + 3,78N_2] \longrightarrow CO_2 + \frac{Y}{2}*H_2O + 3,785*\left[1+\frac{Y}{4}\right]N_2$$

Dans le cas des carburants commerciaux, tels que le gazole (diesel) ou l'essence, la valeur y est égale à environ 1,8. Ce qui permet de récrire l'équation ci-dessus de la manière suivante :

$$CH_{1,8} + 1,45[O_2 + 3,78N_2] \longrightarrow CO_2 + 0,9*H_2O + 5,49N_2$$

De cette équation, il résulte que pour chaque mole de carburant, il est généré à l'échappement une mole de gaz carbonique, 0,9 mole d'eau et 5, 49 moles d'azote ; soit compte tenu des masses molaires respectives, 44 g de gaz carbonique, 16 g de vapeur d'eau et 154 g d'azote, correspondant à une masse totale de 214 g ou 198 g de gaz sec et une pression partielle de l'eau $P_{H_2O}$ égale au produit de la pression des gaz par le rapport molaire eau sur gaz, soit comme les gaz de carter sont à une pression sensiblement égale à la pression atmosphérique, $P_{H_2O} \approx 12000$ Pa ou encore 0,12 bar.

Par ailleurs, les gaz d'échappement contiennent de plus une certaine quantité de gaz imbrûlés, soit essentiellement de l'air et du carburant. Pour un carburant commercial, il faut typiquement 14,7 g d'air pour brûler 1 g de carburant avec un mélange à richesse 1 (c'est-à-dire dans les conditions stoechiométriques de la réaction de combustion). Cet air contient une certaine masse d'eau qui varie en fonction du degré d'hygrométrie. Si on admet que la température extérieure est de 20 °C et le degré d'hygrométrie de 50%, sa teneur en eau est de 0,0073 kg d'eau par kg d'air sec. Comme les équations de combustion montrent que pour une mole de carburant $CH_{1,8}$, il faut 177 g d'air, à l'admission, on admet environ 1,29 g d'eau par mole de carburant (à comparer au 16 g générés en plus par la réaction de combustion)

L'analyse des gaz de carter a mis en évidence qu'après séchage et deshuilage, ils sont typiquement constitués en masse pour 1,5% de $CO_2$, 18% d'oxygène et 80% d'azote $N_2$. A noter que la composition exacte varie en fonction de nombreux paramètres comme par exemple l'architecture du moteur, de la richesse du mélange air-carburant, de l'avance à l'allumage, ou encore le type de combustion. L'oxygène et l'azote proviennent de l'air d'admission, soit pour 100 moles de gaz de carter (18*16+80*28)=2530 g d'air, qui comme calculé précédemment vont apporter 18,4 g d'eau en supposant l'air d'admission à 20°C et 50% d'hygrométrie. Ces 18,4 g d'eau correspondent sensiblement à 1 mole d'eau.

Le dioxyde de carbone provient pour sa part des gaz brûlés, avec une mole de $CO_2$ produite par mole de carburant. Pour 1,5 moles de CO2, on a donc 1,5*0,9=1,35 moles d'eau ou encore 24 g d'eau.

La teneur en eau de ces gaz est donc de 42,4 g pour 2596 g de gaz de carter sec, soit 16 g d'eau par kilogramme de gaz de carter sec. Aux 100 moles de gaz de carter asséchés correspondent donc de plus 1,35 moles d'eau provenant de la combustion et 1 mole d'eau provenant de l'humidité de l'air d'admission, soit dans ces gaz de carter considérés à une pression sensiblement égale à la pression atmosphérique, une pression partielle de l'eau de :

$$P_{H_2O}. = \frac{Nombre\,mole\,eau}{Nombre\,total\,de\,moles}*P_{gaz} = \frac{2,35}{102,35}*P_{gaz} \approx 2200\,Pa$$

Le gel des gaz de carter va se produire si cette eau se retrouve sous une forme solide, donc si les conditions de pression partielle et de température sont incluses dans la phase solide du diagramme d'état de l'eau.

De plus, si cette eau est présente sous forme liquide, donc si les conditions de pression partielle et de température sont incluses dans la phase liquide du diagramme d'état de l'eau, l'eau va former une émulsion avec les gouttelettes d'huile nécessairement présentes dans ces gaz de carter, émulsion favorisée par l'agitation due notamment aux fluctuations de pression.

Pour éviter à la fois le gel et la mayonnaise, il faut donc se placer dans des conditions de pression partielle et de température de l'eau incluses dans la phase gazeuse du diagramme d'état de l'eau.

Pour cela, conformément à une première variante de l'invention, il est proposer de diluer les gaz de carter avec des et secs ou du moins plus secs que les gaz de carter afin de réduire la pression partielle de l'eau.

Cet air sec est de préférence l'air d'admission. En effet, dans l'hypothèse d'une température extérieure de 0°C et d'une hygrométrie de 100%, la teneur en eau de l'air est d'environ 3,5 g par kilogramme d'air - soit environ 5 fois plus sec que les gaz de carter qui, comme calculé précédemment - ont une teneur en eau de l'ordre de 16 g par kilogramme de gaz sec.

Si la température ambiante diminue, par exemple à -30°C , toujours en conservant ce même degré d'hygrométrie, l'humidité absolue de l'air diminue drastiquement jusqu'à 0,2 g d'eau par kilogramme d'air sec. Donc l'effet de déshumidification de l'air produit par la dilution est d'autant plus efficace que l'air ambiant est plus froid.

En appliquant les raisonnements tenus précédemment, si la température de l'air ambiant est de 0°C, il peut être calculé que pour 100 moles de gaz de carter asséchés, il y a de plus 1,35 moles d'eau attribuables aux gaz brûlés et 0,5 mole d'eau apportée par les gaz frais d'admission ; soit avant dilution une pression partielle de l'eau dans les gaz de carter voisine de 1800 Pa.

En utilisant cet air ambiant pour diluer les gaz de carter, avec un coefficient de dilution de 50% (c'est-à-dire en ajoutant un volume d'air ambiant par volume de gaz de carter), on calcule aisément que la composition des gaz dilués secs est alors de 1,5 moles de $CO_2$, 38,8 moles de $O_2$ et 158,6 moles de $N_2$ avec de plus 1,35 + 0,5 moles d'eau apportées par les gaz de carter et 0,55 moles d'eau apportées par l'air de dilution, ou autrement dit une pression partielle en eau des gaz de carter dilués de seulement 1100 Pa.

De même, en suivant le même raisonnement, il peut être calculé que si la température ambiante est de -30°C, la pression partielle de l'eau dans les gaz de carter est voisine de 1600 Pa et peut être ramenée à seulement 700Pa avec une dilution de 50%.

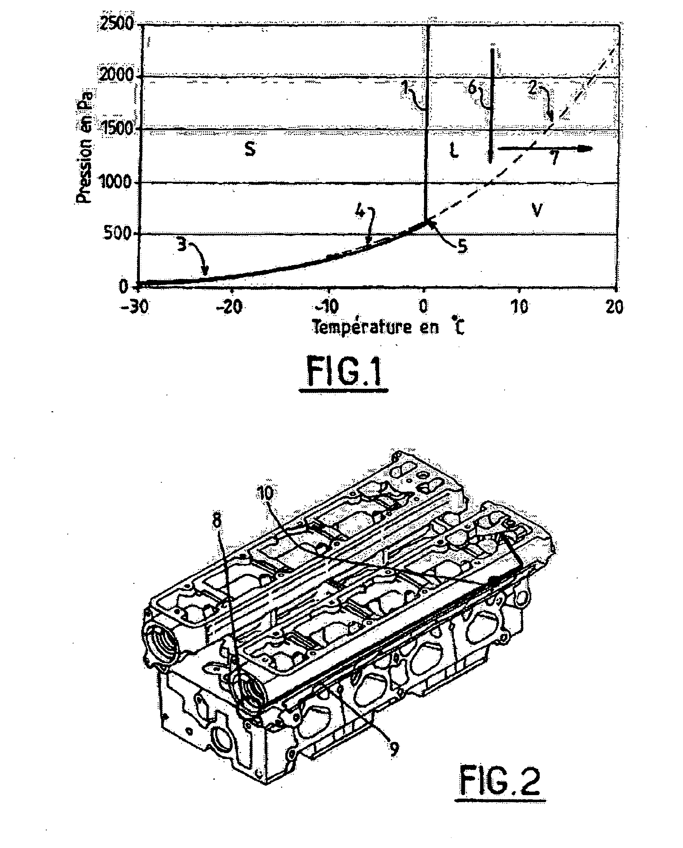

Le diagramme d'état de l'eau représenté à la figure 1 illustre de façon bien connue les différents états de l'eau (V pour vapeur, L pour liquide et S pour solide), en fonction de la température et de la pression partielle de l'eau dans l'air. Sur cette figure, on note en 1, la courbe d'équilibre liquide solide, en 2, la courbe de vapeur saturante au dessus de l'eau liquide, en 3, la courbe de vapeur saturante au dessus de la glace, les courbes 2 et 3 étant pratiquement confondues dans la zone 4 qui correspond à la courbe de vapeur saturante au dessus de l'eau surfondue. Enfin, en 5, le point triple de l'eau, correspondant aux conditions de température et de pression dans lesquelles l'eau est en équilibre sous ses 3 états.

Diluer les gaz de carter avec de l'air ambiant revient donc à se déplacer selon l'axe des ordonnées à isotempérature, comme illustrer par la flèche 6, pour se rapprocher de la zone des basses pressions, dans laquelle l'eau est systématiquement à l'état gazeux.

Une autre façon de se déplacer vers cette zone gazeuse et d'augmenter la température des gaz de carter, ce qui correspond donc à un déplacement dans le sens de la flèche 7. Concrètement, cette variante de l'invention peut être mise en oeuvre en association avec la première variante en procédant à un réchauffage des gaz de dilution. Une méthode simple pour obtenir ce réchauffement, et d'acheminer les gaz de dilution via un conduit longeant une partie chaude du moteur, telle que par exemple la culasse ou le collecteur d'échappement.

Ainsi dans l'exemple de réalisation illustré par la figure 2, un canal 8 est réalisé dans la culasse, soit brut de fonderie ou par usinage. La longueur de ce canal sera ajustée de façon à obtenir un bon compromis entre un bon échauffement (allongement) et un minimum de perte de charge (raccourcissement).

Une électrovanne 9, par exemple pilotée par le calculateur de bord en fonction de la température mesurée par une sonde de température, pourra être utilisée pour autoriser ou non une dilution. Une stratégie type sera de procéder à la dilution dès que la température extérieure est inférieure à 0 °C.

De façon connue, un filtre est de préférence placé en amont de l'électrovanne pour éviter de perturber le fonctionnement de celle-ci.

Le taux de dilution peut être maintenu constant, et dans ce cas, un venturi pourra être utilisé en association avec l'électrovanne. Dans une autre variante de l'invention, ce taux de dilution pourra être ajusté, soit au moyen d'un papillon ou d'une guillotine, soit au moyen d'un ajutage 10. A noter que l'homme de l'art aura compris que le papillon peut également être utilisé au lieu et place de l'électrovanne.

De façon générale, le taux de dilution sera choisi entre 25% et 100%, autrement dit, avec un volume de gaz diluant au moins égal à la moitié du volume des gaz de carter et au plus égal à deux fois le volume des gaz de carter. Si le volume de dilution est trop faible, l'effet de dilution est insuffisant. Par contre, des volumes trop importants il faut redimensionner le circuit de ré-aspiration, et cela pourra perturber la composition du mélange d'admission.

Si le circuit de motorisation est équipé d'un turbo-compresseur, l'air de dilution pourra également être prélevé à la sortie du compresseur, de préférence avant l'échangeur c'est à dire en un point où l'air a été comprimé, donc s'est échauffé, et se trouve sous une pression supérieure à la pression des gaz de carter électrovanne et/ou un ajutage pourront alors être utilisés pour la régulation du débit.

Une autre variante de l'invention est l'utilisation des gaz d'échappement comme gaz de dilution, les gaz d'échappement présentant bien sûr l'avantage d'être chauds. Toutefois, il doit alors être souligné que cette variante pose des problèmes d'implantation, justement en raison de la grande température des gaz d'échappement (nécessité d'une électrovanne apte à fonctionner à une température de plus de 600°C) et que de plus, le gain obtenu en réchauffement est alors largement compensé par l'augmentation du l'humidité, la teneur en eau des gaz d'échappement étant considérablement plus grande que celle de l'air ambiant (même en supposant un degré d'hygrométrie de 100% généralement non rencontré par temps froid).

Ainsi, par des modifications relativement mineures, notamment l'implantation d'une électrovanne sur la culasse (donc en zone « tiède ») et l'ajout de canaux internes à la culasse et/ou au collecteur d'échappement, il devient possible d'éradiquer totalement tout risque de formation de gel et/ou d'émulsion, éliminant ainsi toute nécessité de moyens visant à détruire le gel ou l'émulsion formés en un point du circuit des gaz de carter.

**Revendications**

1. Procédé de traitement des gaz de carter d'un moteur à combustion interne avant leur réadmission au niveau de la culasse **caractérisé par** la dilution des gaz de carter par un gaz diluant présentant un moindre degré d'hygrométrie que les gaz de carter, la dilution étant pilotée par une électrovanne ou un papillon de sorte que le volume de gaz diluant est au moins égal à la moitié du volume des gaz de carter et au plus égal à deux fois le volume des gaz de carter.

2. Procédé selon la revendication 1, **caractérisé en ce que** ledit gaz diluant est l'air d'admission.

3. Procédé selon l'une des revendications précédentes, **caractérisé en ce que** ladite dilution est opérée si la température ambiante est inférieure à 0°C.

4. Procédé selon l'une des revendications précédentes, **caractérisé en ce que** les gaz diluants sont plus chauds que les gaz de carter.

5. Procédé selon les revendications 2 et 4, **caractérisé en ce que** l'air de dilution est réchauffé par un passage le long de la culasse et/ou le long du collecteur d'échappement.

6. Procédé selon l'une des revendications précédentes, **caractérisé par** un ajustement du taux de dilution.

7. Moteur pour la mise en oeuvre du procédé selon l'une quelconque des revendications précédentes, **caractérisé en ce qu'**il comporte

   • des moyens pour réchauffer de l'air d'admission et diluer les gaz de carter avec cet air réchauffé avant leur réadmission au niveau de la culasse, et
   • une électrovanne ou un papillon pour piloter la dilution, de sorte que le volume de gaz diluant est au moins égal à la moitié du volume des gaz de carter et au plus égal à deux fois le volume des gaz de carter.

**Claims**

1. Method of treating crankcase gases in an internal combustion engine before readmission thereof at the cylinder head, **characterised by** the dilution of the crankcase gases by a diluting gas having a lower degree of moisture content than the crankcase gases, the dilution being controlled by a solenoid valve or a butterfly valve so that the volume of diluting gas is at least equal to half the volume of the crankcase gases and no more than twice the volume of the crankcase gases.

2. Method according to claim 1, **characterised in that** said diluting gas is the inlet air.

3. Method according to one of the preceding claims, **characterised in that** said dilution is carried out if the ambient temperature is less than 0°C.

4. Method according to one of the preceding claims, **characterised in that** the diluting gases are hotter than the crankcase gases.

5. Method according to claims 2 and 4, **characterised in that** the dilution air is heated by passing along the cylinder head and/or along the exhaust manifold.

6. Method according to one of the preceding claims, **characterised by** an adjustment of the dilution rate.

7. Engine for implementing the method according to any one of the preceding claims, **characterised in that** it comprises:

- means for heating the admission air and diluting the crankcase gases with this heated air before readmission thereof at the cylinder head, and
- a solenoid valve or butterfly valve for controlling the dilution, so that the volume of diluting gas is at least equal to half the volume of the crankcase gases and no more than twice the volume of the crankcase gases.

**Patentansprüche**

1. Verfahren zur Aufbereitung der Motorgehäusegase eines Innenverbrennungsmotors vor deren erneutem Einlass im Bereich des Zylinderkopfes, **gekennzeichnet durch** die Verdünnung der Motorgehäusegase **durch** ein Verdünnungsgas mit einem geringeren Hygrometriegehalt, als jenem der Motorgehäusegase, wobei die Verdünnung **durch** ein Magnetventil oder eine Drosselklappe gesteuert wird, sodass das Verdünnungsgasvolumen mindestens gleich der Hälfte des Motorgehäusegasvolumens, und höchstens gleich dem Doppelten des Motorgehäusegasvolumens entspricht.

2. Verfahren nach Anspruch 1, **dadurch gekennzeichnet, dass** das besagte Verdünnungsgas die Einlassluft ist.

3. Verfahren nach einem der vorherigen Ansprüche, **dadurch gekennzeichnet, dass** die besagte Verdünnung vorgenommen wird, wenn die Umgebungstemperatur unter 0°C liegt.

4. Verfahren nach einem der vorherigen Ansprüche, **dadurch gekennzeichnet, dass** die Verdünnungsgase heißer sind, als die Motorgehäusegase.

5. Verfahren nach den Ansprüchen 2 und 4, **dadurch gekennzeichnet, dass** die Verdünnungsluft durch das Strömen entlang des Zylinderkopfes und/ oder entlang des Auspuffkrümmers erhitzt wird.

6. Verfahren nach einem der vorherigen Ansprüche, **gekennzeichnet durch** eine Anpassung der Verdünnungsrate.

7. Motor zur Umsetzung des Verfahrens nach irgendeinem der vorherigen Ansprüche, **dadurch gekennzeichnet, dass** er folgendes umfasst

   - Vorrichtungen zum Erhitzen der Einlassluft und zum Verdünnen der Motorgehäusegase mit dieser erhitzten Luft vor deren erneutem Einlass im Bereich des Zylinderkopfes, und
   - ein Magnetventil oder eine Drosselklappe zum Steuern der Verdünnung, sodass das Verdünnungsgasvolumen mindestens gleich der Hälfte des Motorgehäusegasvolumens, und höchstens gleich dem Doppelten des Motorgehäusegasvolumens entspricht.

FIG.1

FIG.2

**EP 1 934 441 B1**

## RÉFÉRENCES CITÉES DANS LA DESCRIPTION

**Documents brevets cités dans la description**

- GB 2158153 A